# DEMANDE DE BREVET EUROPEEN

(11) **EP 0 585 188 A1**
(43) Date de publication de la demande: **02.03.1994**
(21) Numéro de dépôt: 93430011.2
(22) Date de dépôt: 24.08.1993
(51) Int. Cl.: E02F 5/10, F16L 1/032, H02G 1/06

(54) **Dispositif de pose mécanisée de canalisations souterraines**

(30) Priorité: 25.08.1992 FR 9210422
(71) Demandeur: ENTREPRISE D'ELECTRICITE ET D'EQUIPEMENT (Société en nom collectif), F-30000 Nimes (FR); Martin, Jacky, F-30420 Calvisson (FR)
(72) Inventeur: Privat, Roger, F-34280 Carnon (FR)
(74) Mandataire: Marek, Pierre

(57) **Abrégé**

Appareil pour la pose et l'exécution simultanée d'une protection mécanique de canalisations souples dans une tranchée, caractérisé en ce qu'il comprend trois caissons (C1, C2, C3) disposés en succession, les deux caissons extremes (C1, C3) étant agencés pour recevoir et répandre un matériau fluant, et le caisson intermédiaire ou central (C2) délimitant un volume ouvert à sa base et à son som-met pour le passage des canalisations (E) et étant équipé de moyens de guidage pour la canalisation ou le faisceau de canalisations (E) à poser, cet appareil étant encore caractérisé par le fait qu'il est constitué de deux parties séparables (A, B) assemblées dans la zone du caisson central (C2) au moyen d'une articulation.

## Description

La présente invention a pour objet un dispositif qui, attelé ou disposé à la suite d'une machine de terrassement conventionnelle appelée trancheuse, permet d'exécuter, en une seule opération, dans une tranchée de largeur minimale, en alignement ou en courbe, la pose souterraine mécanisée et la protection mécanique de canalisations ou gaines souterraines diverses telles que gaines ou canalisations de lignes électriques, de lignes téléphoniques, d'eau, de gaz, de fibres optiques, etc., constituées de matériaux leur conférant une certaine souplesse, de sorte que la tranchée peut être remblayée immédiatement après le passage de l'ensemble.

On décrit ci-après une application plus particulièrement intéresante de l'invention à la pose des canalisations électriques haute tension, mais on souligne encore que l'invention couvre également la pose des canalisations ou gaines souterraines de nature diverse, comme indiqué précédemment. Pour donner à l'exposé qui suit la concision souhaitable, on utilise exclusivement le terme "canalisations" dans la suite de la description, mais il est évident que ce mot n'a pas un caractère strictement limitatif et qu'il doit être considéré comme pouvant également désigner des câbles, tuyaux, gaines et autres articles flexibles analogues.

La pose des canalisations électriques souterraines haute tension nécessite généralement, à ce jour, dans l'ordre :
- l'ouverture préalable d'une tranchée d'une largeur de 1 = 0,60 mètre environ, accessible à l'homme et sur toute la longueur de tracé du tronçon de canalisation à poser, ce qui entraine donc un volume important de déblais à stocker ;
- la pose, dans le fond de la tranchée, d'un radier de mortier sur toute la longueur du tronçon ;
- le déroulage des canalisations en fond de tranchée ;
- la pose d'un mortier d'enrobage des canalisations, pour assurer leur protection mécanique ;
- le remblaiement de la tranchée.

Ces opérations entraînent la neutralisation totale du sol sur toute la longueur du tronçon considéré et pendant toute la durée des travaux.

En outre, ces opérations impliquent :
- le balisage et la protection de la tranchée pendant toute la durée des travaux ;
- un effectif ouvrier important ;
- un volume important des terrassements et, corrélativement, un volume important du mortier de protection et des matériaux de remblaiement.

Les contraintes découlant de ce processus deviennent de plus en plus intolérables du point de vue de la neutralisation du sol pendant les travaux, principalement en bordure de voies de circulation qui constituent pourtant un tracé privilégié pour ce type d'installation.

Ainsi, est apparue, aux maîtres d'ouvrages et aux entreprises spécialisées, la nécessité de concevoir des procédés dits de "pose mécanisée" permettant d'associer, aux impératifs de contrainte minimale, une substantielle économie de délais, de main d'oeuvre et de matériaux, et, par conséquent, des investissements à engager.

Pour atteindre cet objectif, il faut réduire le volume des travaux de génie civil, c'est-à-dire la largeur de la tranchée et donc le volume des déblais ou remblais et le volume du matériau (mortier, béton, sable, etc.) de protection, sans remettre en cause les normes qui régissent les conditions d'installation des canalisations concernées.

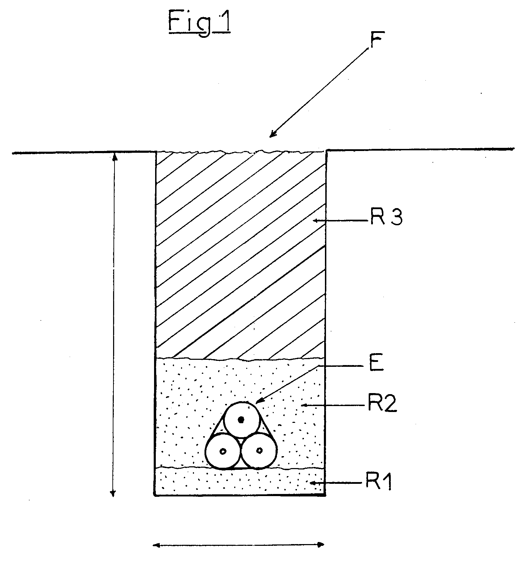

Par exemple, certaines canalisations telles que les canalisations électriques haute tension, sont généralement rassemblées en faisceau, comme illustré à la figure 1 qui montre un faisceau de trois câbles électriques ligaturés de manière à présenter un profil en trèfle, et ces faisceaux de canalisations doivent être positionnés de manière uniforme d'un bout à l'autre de la tranchée.

On a déjà cherché à réaliser cet objectif, mais les solutions proposées à ce jour ne sont guère satisfaisantes.

Par exemple, le document DE-A-2.504.598 décrit, de manière extrêmement sommaire, une machine simpliste comprenant, en succession et dans le sens de progression de ladite machine, un soc pour l'ouverture d'une saignée dans le sol, une première colonne creuse pour déverser une couche de sable dans le fond de la saignée, un tube vertical pour guider un câble dans le fond de ladite saignée, une deuxième colonne creuse pour déverser une couche de sable sur le câble déposé et une gaine verticale pour la pose d'une feuille isolante sur la couche de sable supérieure. La machine décrite dans le document susmentionné est beaucoup trop rudimentaire pour remplir efficacement la fonction à laquelle a souhaité la destiner son auteur. En effet, rien n'est prévu : pour empêcher la saignée ouverte de se refermer à l'arrière du soc, pour déposer des couches uniformes de sable, pour travailler à un niveau constant, pour permettre de poser des canalisations ou des faisceaux de câbles auxquels on ne peut donner des petits rayons de courbure, etc.

Le document US-A-3.203.188 décrit, au contraire, une excavatrice de tranchée complexe laquelle est agencée pour pouvoir poser un câble ou une canalisation dans le fond de la tranchée creusée par l'outil de la machine. Cette machine comporte un moyen de criblage des déblais, des moyens d'acheminement et de déversement d'une partie de la terre tamisée dans le fond de la tranchée, avant la pose du câble, et des moyens d'acheminement et de déversement de l'autre partie de la terre tamisée dans ladite tranchée, après la pose du câble. Il s'agit d'une machine compliquée et coûteuse dont les deux unités de travail (excavatrice et dispositif de pose de câble) sont inséparables, de sorte que la trancheuse proprement dite ne peut être utilisée pour d'autres travaux. D'autre part, cette machine ne permet pas de réaliser un enrobage du câble posé dans des matériaux autres que la terre tamisée, ce qui n'autorise pas une bonne protection mécanique ; elle ne permet pas d'éviter les éboulements des parois de la tranchée à l'arrière de la roue excavatrice, avant, pendant et après la pose du câble ; elle ne permet pas un positionnement rigoureux du câble dans le fond de la tranchée, ce qui constitue un important inconvénient pour la pose de faisceaux de canalisations électriques ou autres tels que mentionnés précédemment. En outre, le dispositif de pose de canalisation, ne présente aucune rigidité dans le plan vertical, de sorte que l'on ne peut garantir l'uniformité de la couche supérieure d'enrobage ce qui, dans certaines applications représenterait aussi un important inconvénient.

L'invention vise à atteindre les objectifs susmentionnés, en remédiant aux inconvénients des dispositifs et méthodes de pose mécanisée de canalisations déjà proposés.

Selon l'invention, ce but est atteint grâce à un appareil ou machine comprenant trois caissons disposés en succession, les deux caissons extrêmes étant agencés pour recevoir et répandre un matériau fluant et le caisson central délimitant un volume ouvert à sa base et à son sommet pour le passage des canalisations et étant équipé de moyens de guidage pour la ou lesdites canalisations à poser, cet appareil étant encore remarquable par le fait qu'il est constitué de deux parties séparables assemblées dans la zone du caisson central au moyen d'une articulation.

Cet appareil procure de nombreux avantages. Il évite la chute d'éboulis résultant de l'éboulement des parois de la tranchée dans la zone de pose des câbles. Il permet un positionnement rigoureux d'une canalisation ou d'un faisceau de canalisations dans le fond de la tranchéè. Il autorise la séparation de ses deux parties constituantes principales dans la zone du caisson central et le dégagement des canalisations, en cas de besoin. Il est robuste et simple et, par conséquent, économique. Il peut être utilisé pour la pose de canalisations dans des tranchées présentant des portions courbes ayant un faible rayon de courbure.

De manière générale, l'appareil de l'invention permet de réduire la largeur de la tranchée devant recevoir les canalisations, de maitriser rigoureusement les volumes du matériau de protection à mettre en place, et de poser, simultanément à l'ouverture de la tranchée, des faisceaux de canalisations et leur protection mécanique.

Plus précisément, l'appareil de l'invention permet l'utilisation d'une trancheuse conventionnelle conçue pour ouvrir des tranchées de petite largeur, à laquelle peut être attelée ledit appareil permettant la mise en place, successivement, d'un radier, d'un faisceau de canalisations posé sur ce radier, et, enfin, du matériau d'enrobage, suivant les caractéristiques dimensionnelles pré-définies et permettant le dégagement des canalisations en cas de nécessité.

En dehors des périodes d'utilisation de l'appareil, celui-ci peut être désaccouplé de la trancheuse qui peut donc être utilisée seule en cas de besoin.

Les buts, caractéristiques et avantages ci-dessus, et d'autres encore, ressortiront mieux de la description qui suit et des dessins annexés dans lesquels :

La figure 1 est une vue en coupe transversale d'une tranchée dans le fond de laquelle est positionné un faisceau de canalisations reposant sur un radier de mortier et recouvert d'un enrobage de mortier.

La figure 2 est une vue en coupe longitudinale et à caractère schématique de l'appareil selon l'invention.

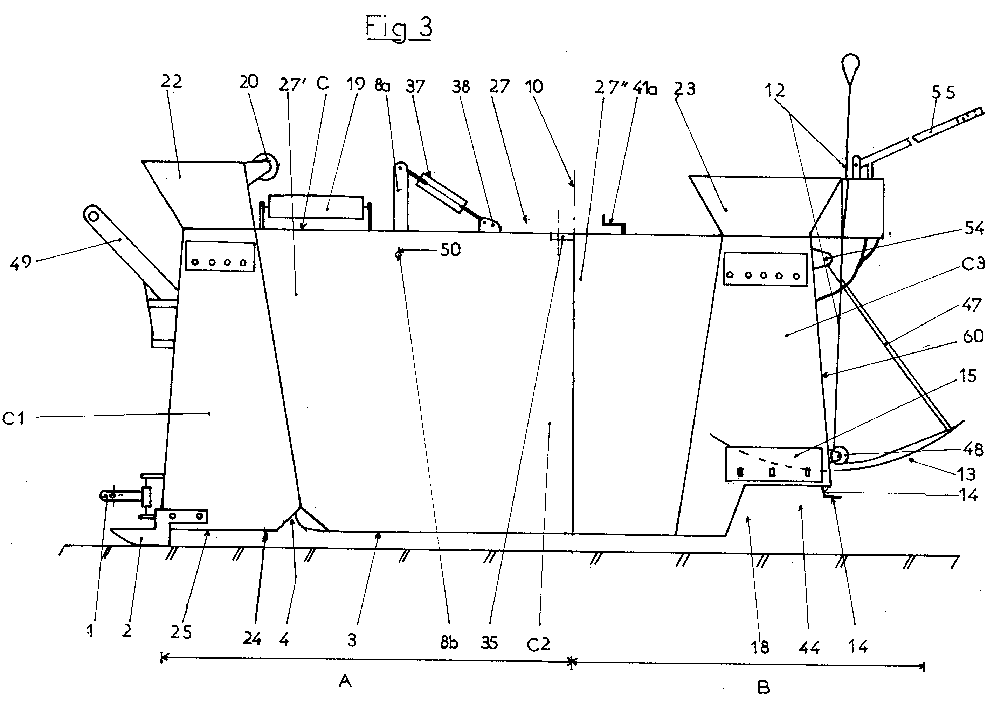

La figure 3 est une vue de côté de cet appareil.

La figure 4 est une vue partielle, en plan et à plus grande échelle, de la partie centrale articulée et séparable de l'appareil.

La figure 5 est une vue de détail, en plan et à plus grande échelle, illustrant le mode de jonction étanche des parois latérales des deux parties de l'appareil.

La figure 6 est une vue de détail, à plus grande échelle, illustrant un exemple de conformation d'un faisceau de canalisations et le profil des galets de maintien et de guidage équipant le caisson central de l'appareil ; le tracé en traits interrompus illustre d'autre conformation possible du faisceau de canalisations, ces galets pouvant aussi servir pour le maintien et le guidage d'une unique canalisation (de gaz, d'eau, etc.).

La figure 7 est une vue de détail illustrant le profil de l'extrémité antérieure de la semelle de talochage disposée en arrière de l'ouverture transversale de déversement du caisson avant.

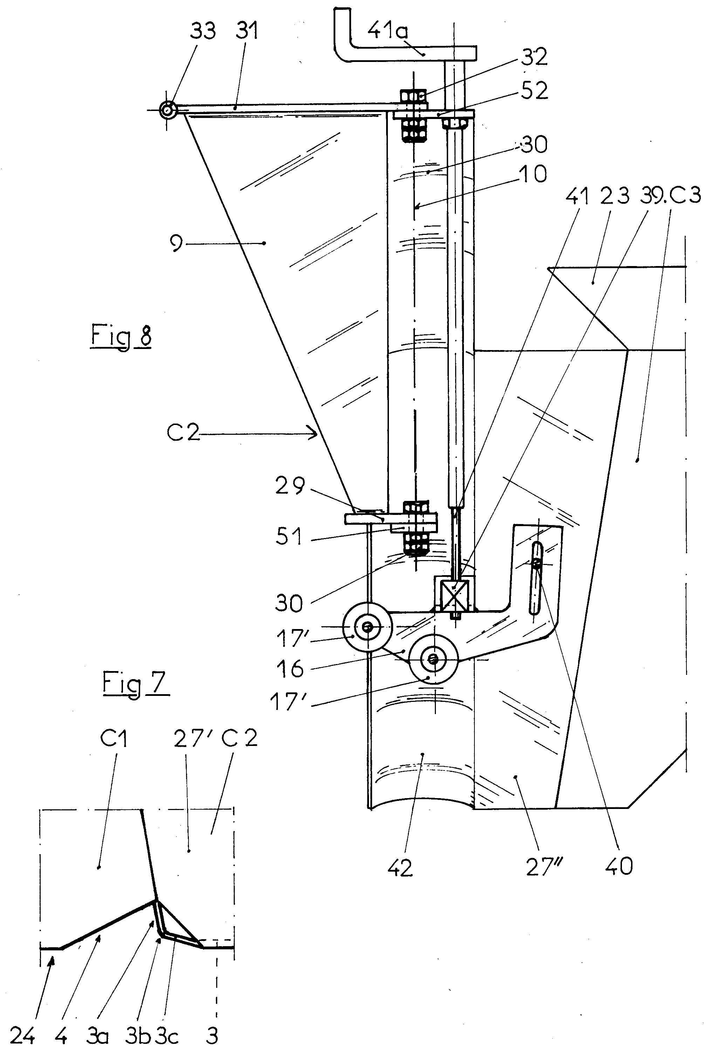

La figure 8 est une vue de côté suivant le plan P-P de la figure 4.

La figure 9 est une vue de face partielle illustrant plus particulièrement les moyens de manoeuvre de la trappe de réglage équipant l'ouverture de déversement du caisson arrière de l'appareil.

La figure 10 est une vue de côté partielle, selon la ligne 10-10 de la figure 9.

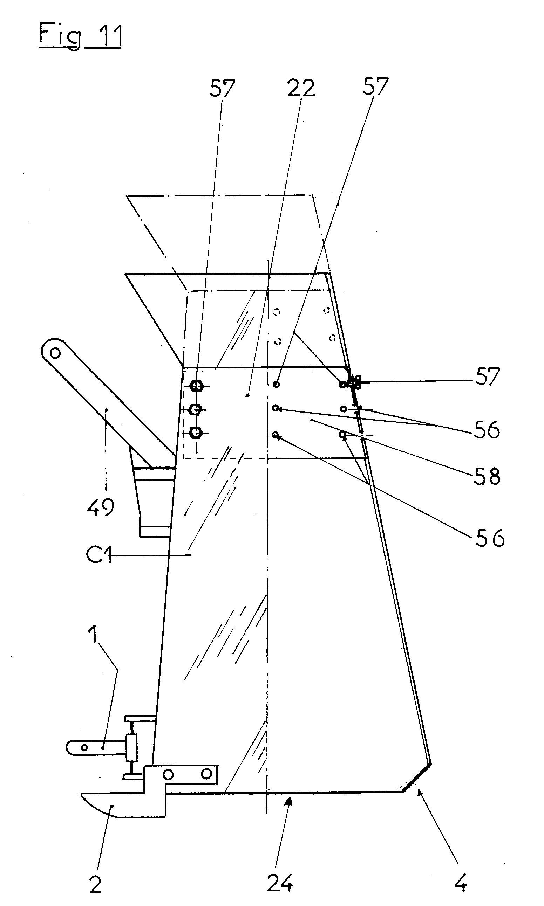

La figure 11 est une vue du caisson avant de l'appareil représenté en vue de côté avec enlèvement partiel de la partie droite de la paroi latérale dudit caisson avant. Le tracé en traits interrompus illustre l'une des autres positions possibles de la trémie ou cône de chargement de ce caisson.

On se réfère auxdits dessins pour décrire un exemple intéressant, quoique non limitatif, de réalisation de l'appareil et de mise en oeuvre du procédé selon l'invention.

Cet appareil comprend deux parties A et B exécutées en tôle de forte épaisseur et assemblées de manière articulée et séparable, ces deux parties délimitant, lorsqu'elles sont assemblées en position fonctionnelle, trois caissons C1, C2, C3 disposés en succession.

La partie avant A est constituée par le caisson avant C1 et une portion du caisson central C2, tandis que la partie arrière B est constituée par une portion du caisson central C2 et le caisson arrière C3.

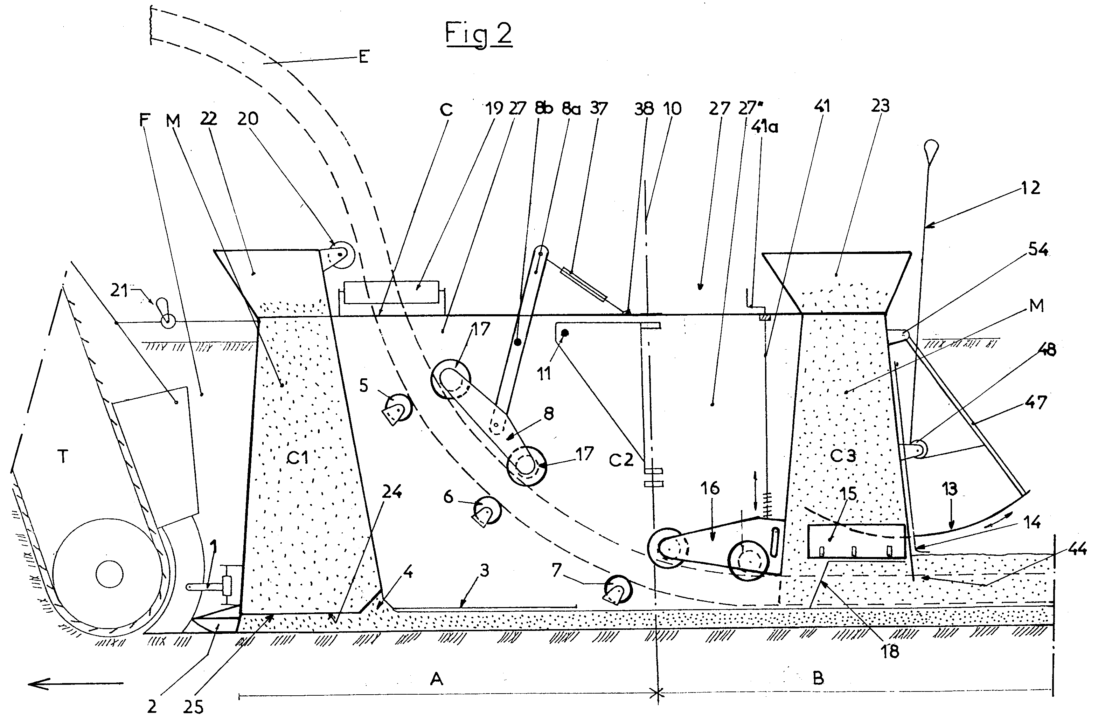

L'extrémité antérieure de la partie avant A est équipée de moyens d'attelage à l'arrière d'un engin de terrassement conventionnel T appelé trancheuse, ces moyens d'attelage étant, par exemple, constitués par un dispositif du genre cardan 1 permettant de relier l'appareil à un organe fixe de la trancheuse tel que le soc racleur de cette dernière (figure 2), cet accouplement articulé permettant une meilleure inscription dans les courbes éventuelles de la tranchée.

De la sorte, l'appareil peut être tracté à fond de fouille F par la trancheuse elle-même ; il peut aussi être déplacé par un autre engin indépendant.

L'extrémité antérieure de la partie avant peut également être munie, en partie haute, d'une petite flèche 49 permettant l'accrochage d'un dispositif de liaison souple 21, tel qu'un cable équipé d'un tendeur.

Le caisson avant C1 est destiné à la confection du radier R1 dans le fond de la fouille ou tranchée F.

L'extrémité antérieure de la partie avant A est munie d'un sabot 2 dont la position peut être réglée dans le plan vertical par tous moyens connus et qui, en s'appuyant sur le fond de la tranchée F sert de référence à la hauteur ou épaisseur du radier R1 (figures 1 et 2), la base des caissons C1, C2 et C3 se trouvant ainsi disposée, grâce à ce sabot, à distance du fond de ladite tranchée.

La partie supérieure des caissons avant C1 et arrière C3, est constituée par une trémie ou cône de chargement 22 et 23, respectivement, fixée, par exemple par boulonnage, sur la partie sous-jacente desdits caissons avant et arrière. De manière préférée, la position des trémies 22 et 23 est réglable en hauteur. Pour cela, la partie inférieure des trémies 22 et 23, peut être constituée par une gaine 58 montée avec une aptitude de coulissement dans l'ouverture supérieure des caissons proprement dits, respectivement C1 et C3, et dont les parois latérales comportent deux alignements espacés de trous superposés 56, pour le passage des tiges des boulons de fixation 57. On comprend qu'il est ainsi possible de fixer les trémies 22 et 23 à des niveaux différents, en fonction des besoins, cela pour faciliter le chargement en tenant compte du mode d'approvisionnement des trémis choisi (camion-toupie ou autres engins) et de la hauteur de la tranchée F.

Les caissons C1 et C3 destinés à contenir et à répandre le matériau d'enrobage M tel qu'un mortier maigre ou autre, ont un volume général de forme légèrement tronco-pyramidale, permettant un bon écoulement dudit matériau, par gravité, jusqu'à leurs ouvertures inférieures de déversement.

Le caisson C1 comporte, à sa base, une large ouverture de déversement 24 constituée par son fond ouvert. En outre, des ouïes 4 sont ménagées dans les côtés opposés du caisson C1 à la base et dans l'extrémité postérieure de celui-ci, en correspondance de l'ouverture 24.

En arrière de ladite ouverture de déversement 24, est disposée une semelle de talochage 3 s'étendant horizontalement en direction de l'arrière, en fermant une portion avant de la base du caisson C2, cette semelle étant disposée à un niveau supérieur à celui ou se trouve la surface d'appui du sabot 2. Cette semelle a une longueur supérieure à la demi-longueur de la portion antérieure du caisson central C2.

On obtient, de la sorte, un excellent compactage et lissage du radier R1 sous l'effet du poids de l'appareil, notamment sous l'effet du poids de la partie avant A de ce dernier.

On observe que la semelle de talochage 3 n'a pas, à son extrémité avant, un profil parfaitement arrondi (figure 7). Plus précisément, cette extrémité avant comporte, successivement, une portion 3a faiblement inclinée par rapport à la verticale, raccordée par un arrondi 3b, à une portion très inclinée 3c, elle-même raccordée à la partie horizontale de la semelle. Cette disposition permet d'éviter un soulèvement de l'appareil, en cours de fonctionnement, en provoquant un "refluage" latéral du matériau de constitution du radier R1, par les ouïes 4.

Le mortier déversé dans la trémie 22 et le caisson C1 descend par gravité au fur et à mesure de l'avancement de l'appareil, il est répandu dans le fond de la tranchée F à travers l'ouverture inférieure 24 dudit caisson, et le radier ainsi réalisé est compacté et lissé par la semelle de talochage 3 au fur et à mesure de l'avancement de la partie A. En outre, les ouies 4 permettent un écoulement du mortier de chaque côté du radier R1, jusqu'aux parois latérales de la tranchée F.

Dans la portion antérieure du caisson C2 est installé un berceau d'appui incliné de haut en bas vers l'arrière et constitué d'une pluralité de galets 5, 6 et 7 disposés suivant une ligne courbe concave. Le premier (5) de ces galets est disposé à l'avant et au voisinage du bord supérieur de la portion antérieure du caisson C2, tandis que le troisième galet 7 est placé à l'arrière et à proximité de la base de ladite portion antérieure.

Les références 19, 20 désignent des rouleaux disposés longitudinalement et transversalement, respectivement, au-dessus de la partie supérieure de la portion antérieure du caisson intermédiaire C2, et dont le rôle est de guider le faisceau de canalisations E avant son entrée dans ledit caisson.

La canalisation ou le faisceau de canalisations E est posé sur les galets 5, 6, 7, et un dispositif complémentaire de maintien et de guidage est mis en place dans la portion antérieure du caisson C2, au-dessus du faisceau de canalisations E reposant sur lesdits galets. Ce dispositif est constitué par un balancier 8 monté avec une aptitude de basculement autour d'un axe horizontal, à l'extrémité inférieure d'un levier 8a, lui-même monté pivotant, à l'aide de sa partie centrale et au moyen d'un axe horizontal 8b, entre les parois latérales 27' de la portion antérieure du caisson C2. Les extrémités du balancier 8 sont équipées de galets à gorge 17 dont la gorge 28 présente un fond arrondi et dont les parois internes forment, entre elles, un angle α de l'ordre de 60 degrés. Ce profil particulier permet une adaptation des galets de maintien et de guidage 17 et 17' (décrits dans la suite du présent exposé) à différentes configurations du faisceau de canalisations, ou au profil d'une canalisation unique, comme le montre la figure 6. Les canalisations E, notamment dans le cas de canalisations électriques haute tension, peuvent être rassemblées en faisceau, selon une conformation en trèfle, au moyen d'un cerclage 26 réalisé à l'aide d'un ruban adhésif ou autre, comme illustré aux figures 1 et 6.

Le balancier 8 est monté de manière amovible dans la portion antérieure du caisson C2, l'axe 8b du levier 8a étant par exemple maintenu en position fonctionnelle au moyen de goupilles 50 mises en place sur ses extrémités et qu'il suffit donc de retirer pour pouvoir déposer ledit balancier, en fin de chantier ou pour permettre de dégager les canalisations du caisson, si nécessaire.

La partie arrière B de l'appareil comprend la portion postérieure du caisson central C2 et le caisson arrière C3 muni de la trémie 23 et destiné à la mise en place de l'enrobage R2 des canalisations posées sur le radier R1.

Selon une importante caractéristique de l'invention, les parties A et B sont assemblées au moyen d'une articulation, dans la zone du caisson central C2 et la jonction des portions de parois latérales 27', 27'' dudit caisson central est réalisée de manière à assurer une étanchéité à la chute éventuelle d'éboulis à l'intérieur de ce dernier.

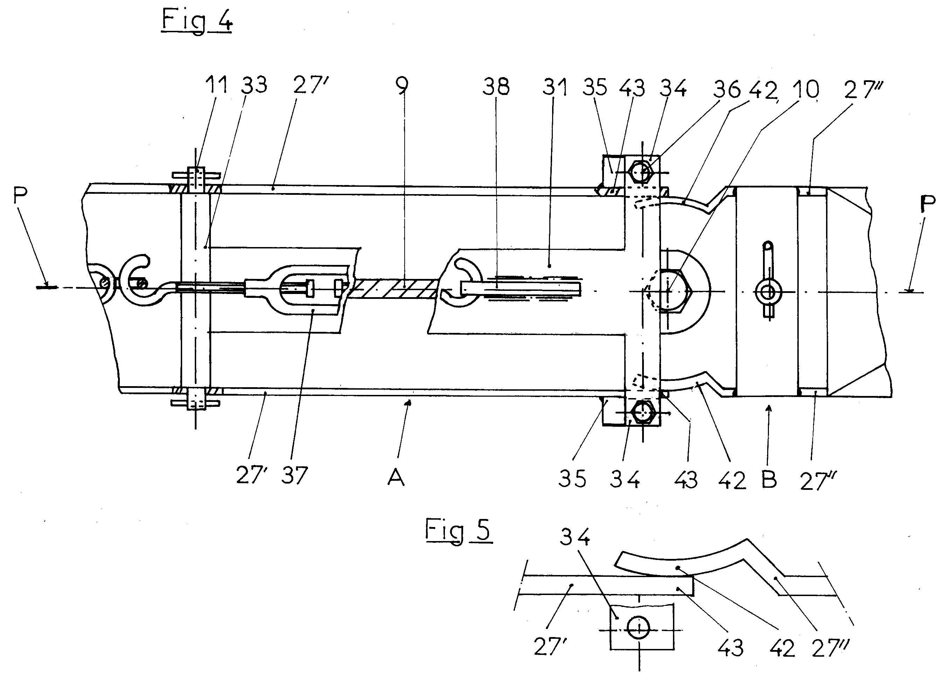

La portion postérieure du caisson C2 est équipée d'une plaque de liaison 9 de forme trapézoidale, montée avec une aptitude de pivotement autour d'un axe vertical 10, à l'avant de ladite portion postérieure, ledit axe étant disposé dans le plan vertical médian P-P du caisson C2 (figure 4). Cette plaque de liaison pivotante 9 est, par exemple, rigidement solidaire, à sa base, d'une patte horizontale 29 par l'intermédiaire de laquelle elle est articulée, au moyen d'un axe 30, sur une entretoise 51 reliant rigidement les parois 27'' de la portion postérieure du caisson C2, tandis que ladite plaque de liaison est rigidement solidaire, à son sommet, d'une plaque horizontale 31 par L'intermédiaire de laquelle elle est articulée, au moyen d'un axe 32, sur une entretoise 52 reliant rigidement le bord supérieur desdites parois 27''.

L'extrémité avant de la plaque supérieure 31 est munie d'un manchon horizontal 33 dimensionné pour pouvoir être engagé entre les parois 27' de la portion antérieure du caisson C2 laquelle appartient à la partie avant A. Un axe 11 traversant des perçages ménagés dans les parois latérales 27' et le manchon 33 permet d'établir une première liaison entre les parties A et B, le blocage dudit axe pouvant par exemple être obtenu au moyen d'une tête d'arrêt constituant l'une de ses extrémités et d'une goupille engagée dans un trou que présente son autre extrémité.

D'autre part, la plaque supérieure 31 comporte, au droit de son articulation, deux ailettes latérales 34 pourvues d'un trou, tandis que les parois 27' comportent dans leur partie postérieure et supérieure, des oreilles latérales 35 dirigées vers l'extérieur et également pourvues d'un trou. Dans la position d'assemblage des parties A et B, les ailettes 34 se trouvent disposées au-dessus des oreilles 35 et des organes de fixation tels que, par exemple, des boulons 36 traversant les trous desdites ailettes et oreilles, permettent d'établir deux autres points de liaison entre les parties A et B. Les trois points de liaison susmentionnés assurent la rigidité de l'ensemble A-B dans le plan vertical de sorte que l'une des parties ne peut basculer par rapport à l'autre dans la zone de leur assemblage articulé.

Un dispositif de liaison de longueur réglable 37 tel qu'une chaine associée à un tendeur relie l'extrémité supérieure du levier 8a et une patte 38 fixée sur la plaque supérieure 31. Ce dispositif permet de régler la position du balancier 8 au-dessus des canalisations E après mise en place de celles-ci.

Au voisinage de sa base, la portion postérieure du caisson C2 est équipée de galets 17' identiques aux galets 17 du balancier 8. La position de ces galets 17' est réglable en hauteur, par l'intermédiaire d'un système vis-écrou. Le dispositif de réglage comporte, par exemple, un écrou 39 rigidement solidaire de la monture 16 des galets 17' laquelle est guidée verticalement par un guide 40 solidaire des parois latérales 27'' du caisson C2. Une vis verticale 41 se vissant dans l'écrou 39 et manoeuvrable à la partie supérieure du caisson C2, au moyen d'une manivelle 41a constituant l'extrémité supérieure de ladite vis, permet, suivant son sens de rotation, de communiquer des mouvements ascendant ou descendant à l'ensemble 16-17'. Ce réglage permet d'amener la canalisation ou le faisceau de canalisation E le plus près possible de la surface du radier R1.

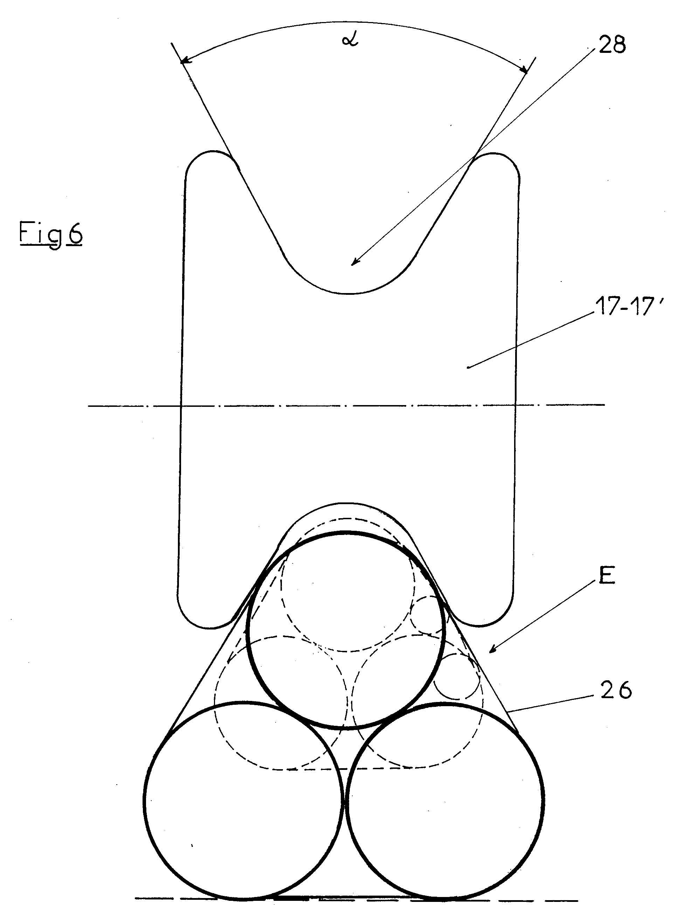

Les bords verticaux avant 42 des parois latérales 27'' de la portion arrière du caisson central C2 qui, en position de jonction des parties A et B et de fonctionnement de l'appareil, se trouvent engagés entre les bords verticaux arrière 43 des parois latérales 27' de la portion avant dudit caisson et en contact avec ces derniers, ont un profil courbe formant rotule, comme illustré aux figures 4 et 5, grâce auquel lesdites parties A et B peuvent pivoter l'une par rapport à l'autre, dans le plan horizontal, tout en restant en contact et en préservant l'étanchéité à la chute éventuelle d'éboulis à l'intérieur du caisson.

La partie B peut être équipée d'un câble de manutention 12 permettant sa mise en place, au moyen d'un engin de manutention (non représenté).

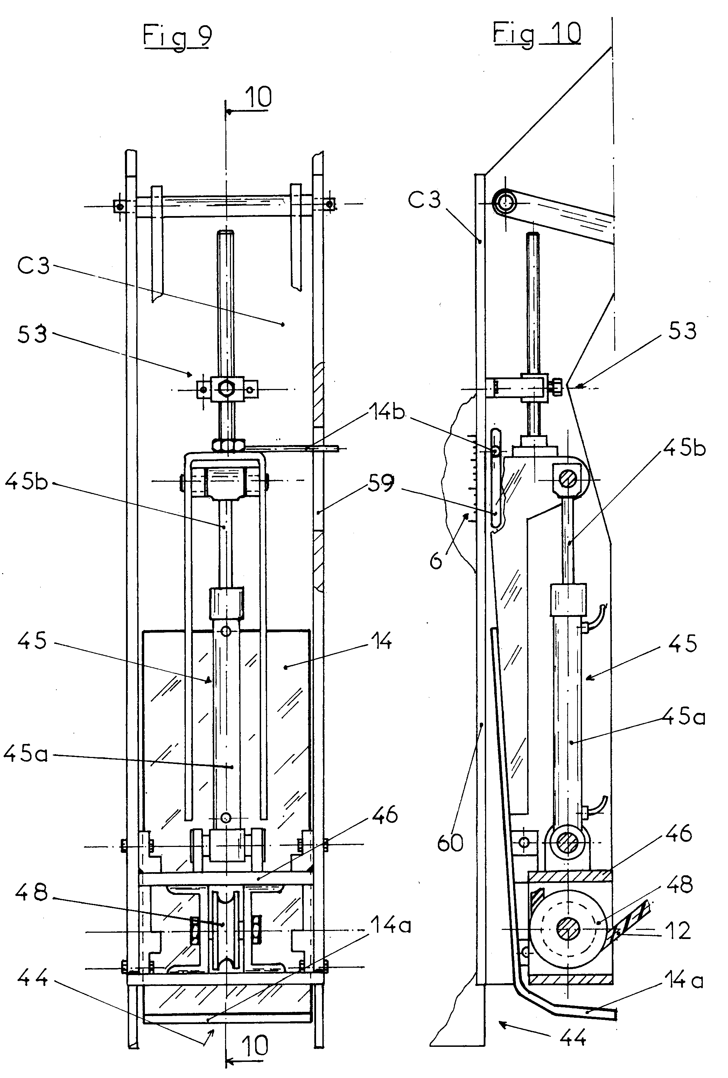

Le fond du caisson arrière C3 est ouvert et sa paroi postérieure 60 est pourvue, à sa base, d'une ouverture transversale 44, pour la sortie du mortier d'enrobage contenu dans ledit caisson. Cette ouverture transversale est réglable au moyen d'une trappe coulissante 14 assujettie à un moyen de manoeuvre. Ce moyen de manoeuvre est, de préférence, constitué par un vérin hydraulique à double effet 45 fixé (figures 9 et 10) :
- d'une part, par l'intermédiaire de l'extrémité inférieure de son corps 45a à un support 46 solidaire de la paroi arrière du caisson C3, et,
- d'autre part, par l'intermédiaire de l'extrémité supérieure de sa tige 45b, à la structure supérieure de la trappe 14.

Le vérin 45 est manoeuvré manuellement à l'aide d'un levier 55 installé à la partie postérieure de la partie arrière B de l'appareil, ce levier agissant sur une pompe à huile connectée au vérin 45.

La partie haute de la trappe 14 est aussi assujettie à un système de tige et vis de blocage 53 permettant de bloquer ladite trappe dans la position désirée dans le cas d'une éventuelle défaillance du vérin 45.

La base de la trappe 14 est munie d'une taloche qui peut être simplement constituée par l'extrémité inférieure 14a repliée vers l'arrière de ladite trappe.

D'autre part, la structure supérieure de la trappe 14 peut être munie d'un doigt 14b orienté latéralement et pouvant se déplacer verticalement, en même temps que celle-ci, dans une fente verticale 59 ménagée dans un élément de paroi latérale, en regard d'une graduation G portée sur l'un des bords de ladite fente, de manière à visualiser, à partir du sol, le niveau de la taloche arrière de lissage 14a et, par conséquent, l'épaisseur de l'enrobage qui dépend de la position de ladite trappe.

Chaque paroi latérale du caisson C3 comporte également, à sa base, une découpe ou ouie 18 dont l'ouverture peut être réglée par une trappe 15 mobile verticalement et permettant un écoulement du matériau d'enrobage sur chaque côté dudit caisson.

Le caisson arrière C3 est encore équipé d'une palette courbe 13 montée avec une aptitude de pivotement, à l'arrière dudit caisson. L'une des extrémités de cette palette courbe 13 est, par exemple, rigidement solidaire de deux bras symétriques 47 fixés, au moyen d'une articulation 54, à la partie arrière du caisson C3.

En cours de fonctionnement de l'appareil, la palette 13 est totalement sortie du caisson. Cette palette peut être rentrée dans le caisson par pivotement autour de l'axe d'articulation des bras 47, de manière à retenir, dans ledit caisson, le matériau d'enrobage qui pourrait rester dans ce dernier lorsque le travail est arrêté.

La pénétration de la palette 13 à l'intérieur de la partie inférieure du caisson arrière C3, peut être obtenue au moyen du câble de manutention 12 qui, dans ce cas, est fixé par l'une de ses extrémités à la paire de leviers 47 et s'enroule sur une poulie 48 disposée à l'arrière et à la partie inférieure dudit caisson, de sorte que ladite palette 13 pénètre automatiquement dans la partie inférieure de celui-ci lorsqu'une traction est exercée sur ledit câble.

On décrit maintenant la mise en oeuvre de l'appareil selon l'invention, laquelle se caractérise par la succession d'opérations ci-après :
- ouverture d'une tranchée F sur une longueur au moins égale à la longueur de la partie avant A de l'appareil, en arrière de la trancheuse T ;
- mise en place de la partie avant A à fond de tranchée et attelage de cette partie A à l'arrière de la trancheuse ; au départ, la partie A est maintenue horizontale par le dispositif tendeur 21 accroché, par l'intermédiaire de ses extrémités opposées sur la flèche 49 et sur la trancheuse T, ensuite, l'appui sur le radier réalisé sera suffisant pour obtenir un bon nivellement.
- remplissage du caisson C1 et de la trémie 22 ;
- reprise de l'ouverture de la tranchée avec déplacement de la partie A pour confection du radier R1 ; lors de ce déplacement, le matériau d'enrobage contenu dans le caisson C1 est répandu sur le fond de la tranchée, par l'ouverture de déversement 24 et les ouïes latérales 4, et il est compacté et lissé par la semelle de talochage 3.

Lorsque le radier a été réalisé sur une longueur au moins égale à la longueur totale de l'ensemble des deux parties A et B, éventuellement majorée d'une longueur de canalisations laissée libre pour les raccordements, l'ensemble est arrêté et lesdites canalisations E préalablement disposées sur une charpente équipée de galets, au-dessus de la trancheuse T et le long de celle-ci, sont introduites dans le volume délimité par la partie antérieure du caisson C2.
- mise en place des canalisations E dans la partie avant du caisson C2 ;
- mise en place du balancier 8 et réglage des galets de guidage 17 ;
- réglage de la position des trappes 14 et 15 équipant le caisson C3, en fonction des dimensions à donner à l'enrobage R2 ;
- mise en place de la partie arrière B dans la tranchée F ; comme indiqué précédemment, la partie arrière B est équipée d'un câble de manutention 12, lors de sa mise en place, la partie B est soulevée par ce câble et se présente inclinée au droit de la position de travail qu'elle occupera ensuite ; l'axe 11 est alors mis en place et la traction sur le câble 12 étant progressivement supprimée, la partie B bascule autour de cet axe et prend sa position de travail à fond de tranchée.
- retrait de la palette 13 ;
- réglage de la position des galets 17' de l'ensemble 16 pour appuyer sur le dessus des câbles ou canalisations ;
- remplissage du caisson C3 et de la trémie 23 ;
- reprise de l'ouverture de la tranchée ; lors de la progression de l'ensemble, l'appareil permet, simultanément, la confection du radier R1, la pose des câbles ou canalisations E et la mise en place de l'enrobage R2 des câbles ou canalisations posées, le matériau d'enrobage renfermé dans le caisson arrière C3, étant répandu par l'intermédiaire de son fond ouvert, de l'ouverture transversale arrière 44 et des ouïes latérales 18 dudit caisson arrière, et ensuite compacté et lissé par la taloche arrière 14a.

La tranchée ainsi équipée peut être remblayée au moyen du remblai R3, dès le passage de l'ensemble.

En fin de chantier ou en cas d'incident, les parties A et B peuvent être séparées et retirées et les câbles ou canalisations dégagées.

Le processus est le suivant :
L'extrémité libre de la palette 13 est introduite dans l'ouverture 44 et ladite palette est repoussée à l'intérieur du caisson C3 de façon à obturer le bas de ce dernier pour y retenir le matériau d'enrobage inutilisé qui peut rester dans ledit caisson ; cette fermeture peut être obtenue en exerçant une traction sur le câble 12, laquelle provoque d'abord la pénétration de la palette 13 dans le matériau et ensuite son maintien en place évitant un déversement intempestif dans la tranchée.

La palette 13 étant rentrée dans le caisson C3, et les boulons de blocage 36 étant retirés, la partie B est soulevée par l'intermédiaire du câble 12 et bascule autour de l'axe 11 ; la dépose de cet axe désolidarise les parties A et B et la partie arrière B peut être enlevée de la tranchée.

Le balancier 8 porteur des galets 17 est retiré par dépose de son axe 8b et les câbles ou canalisations peuvent être dégagées.

La partie A peut ensuite être enlevée de la tranchée après l'avoir détachée de la trancheuse T.

## Revendications

**1. -** Appareil pour la pose et l'exécution simultanée d'une protection mécanique de canalisations souples dans une tranchée, caractérisé en ce qu'il comprend trois caissons (C1, C2, C3) disposés en succession, les deux caissons extrêmes (C1, C3) étant agencés pour recevoir et répandre un matériau fluant, et le caisson intermédiaire ou central (C2) délimitant un volume ouvert à sa base et à son sommet pour le passage des canalisations (E) et étant équipé de moyens de guidage pour la canalisation ou le faisceau de canalisations (E) à poser, cet appareil étant encore caractérisé par le fait qu'il est constitué de deux parties séparables (A, B) assemblées dans la zone du caisson central (C2) au moyen d'une articulation.

**2. -** Appareil selon la revendication 1, caractérisé en ce que les bords verticaux avant (42) des parois latérales (27'') de la portion arrière du caisson central (2) se trouvent engagés, en position de jonction des deux parties (A, B) dudit appareil, entre les bords verticaux arrière (43) des parois latérales (27') de la portion avant dudit caisson avec lesquels ils se trouvent en contact, et en ce que lesdits bords avant (42) sont conformés ou agencés de manière à former une rotule permettant une rotation desdits bords avant (42) et arrière (43) les uns par rapport aux autres, tout en maintenant un contact préservant l'étanchéité à la chute éventuelle d'éboulis à l'intérieur dudit caisson central (C2).

**3. -** Appareil selon l'une des revendications 1 ou 2, caractérisé en ce que les moyens d'articulation permettant l'assemblage des parties avant (A) et arrière (B) dudit appareil comprennent une plaque (9) montée à l'avant de la portion arrière du caisson central (C2) avec une aptitude de pivotement autour d'un axe (10) disposé dans le plan vertical médian (P) dudit caisson (C2), et en ce que cette plaque pivotante (9) est munie, à sa partie supérieure et à l'avant, d'un manchon horizontal (33) dimensionné pour pouvoir être engagé entre les parois latérales (27') de la portion antérieure du caisson ; la liaison des parties avant (A) et arrière (B) étant réalisée au moyen d'un axe (11) traversant ledit manchon (33) et des perçages ménagés dans lesdites parois latérales (27').

**4. -** Appareil suivant la revendication 3, caractérisé en ce que la plaque pivotante (9) est rigidement solidaire, à sa partie supérieure, d'ailettes latérales (34) pourvues d'un trou, tandis que les parois latérales (27') de la portion antérieure du caisson central (C2) comportent, latéralement, des oreilles latérales (35) pourvues d'un trou, ces ailettes (34) et oreilles (35) étant assemblées au moyen d'organes de fixation (36) permettant d'établir deux autres points de liaison entre les parties avant (A) et arrière (B) de l'appareil.

**5. -** Appareil selon l'une quelconque des revendications 1 à 4, caractérisé en ce que la portion antérieure du caisson central (C2) est munie d'un berceau d'appui incliné de haut en bas, vers l'arrière, et constitué par une pluralité de galets (5, 6, 7) disposés suivant une ligne courbe concave.

**6. -** Appareil suivant l'une quelconque des revendications 1 à 5, caractérisé en ce qu'il comporte un balancier (8) amovible suspendu, avec une aptitude de basculement autour d'un axe horizontal, à l'extrémité inférieure d'un levier (8a) monté pivotant entre les parois latérales (27') de la portion antérieure du caisson central (C2), les extrémités de ce balancier (8) étant équipées de galets (17).

**7. -** Appareil selon la revendication 6, caractérisé en ce que l'extrémité supérieure du levier (8a) portant le balancier (8) est reliée à la plaque pivotante au moyen d'un dispositif de liaison (37) de longueur réglable.

**8. -** Appareil selon l'une quelconque des revendications 1 à 7, caractérisé en ce que la portion postérieure du caisson central (C2) est munie, à l'avant et dans sa partie inférieure d'un ou plusieurs galets (17') de maintien des canalisations (E).

**9. -** Appareil selon la revendication 8, caractérisé en ce qu'il comprend des moyens (39-40-41) permettant de régler la position en hauteur du ou des galets de maintien (17').

**10. -** Appareil selon l'une des revendications 6 ou 9, caractérisé en ce que les galets (17, 17') comportent une gorge (28) à fond arrondi et dont les parois forment un angle d'environ 60 degrés.

**11. -** Appareil suivant l'une quelconque des revendications 1 à 10, caractérisé en ce que les caissons avant (C1) et arrière (C3) destinés à contenir le matériau d'enrobage (M), ont une forme tronco-pyramidale.

**12. -** Appareil selon l'une quelconque des revendications 1 à 11, caractérisé en ce qu'il comporte, d'une part, un sabot (2) disposé à l'avant du premier caisson (C1) pour l'appui de l'appareil sur le fond d'une tranchée (F), et, d'autre part, en arrière de l'ouverture (24) de déversement dudit premier caisson (C1), une semelle de talochage (3) s'étendant vers l'arrière et disposé à un niveau supérieur à celui où se trouve la surface d'appui dudit sabot (2).

**13. -** Appareil selon l'une quelconque des revendications 1 à 12, caractérisé en ce que le premier caisson (C1) comporte, à sa base, des ouïes latérales (4).

**14. -** Appareil suivant l'une quelconque des revendications 1 à 13, caractérisé en ce que l'ouverture transversale (44) de déversement disposée à l'arrière et à la partie inférieure du caisson arrière (C3) est munie d'une trappe (14) mobile en hauteur, permettant de régler la hauteur de ladite ouverture (44).

**15. -** Appareil suivant la revendication 14, caractérisé en ce que l'extrémité inférieure de la trappe (14) est conformée ou agencée pour constituer une taloche (14a).

**16. -** Appareil selon l'une quelconque des revendications 1 à 15, caractérisé en ce que le caisson arrière (C3) comporte, à sa base, des ouïes latérales (18) de préférence équipées de trappes mobiles en hauteur (15), permettant de régler la hauteur de ces ouïes.

**17. -** Appareil suivant l'une quelconque des revendications 1 à 16, caractérisé en ce que le caisson arrière (C3) est muni, à l'arrière, d'une palette courbe (13) fixée à l'extrémité d'une paire de bras pivotants (47), cette palette ayant une largeur lui permettant de s'introduire dans la partie inférieure dudit caisson (C3) à travers l'ouverture arrière (44) de ce dernier.

**18. -** Appareil selon la revendication 17, caractérisé en ce qu'il comporte un câble de manutention (12) fixé par l'une de ses extrémités, à la paire de bras (47) équipés de la palette courbe (13) et s'enroulant sur une poulie (48) disposée à l'arrière et à la partie inférieure du caisson arrière (C3), de sorte que ladite palette courbe (13) pénètre automatiquement dans ledit caisson lorsqu'une traction est exercée sur ledit câble (12).

**19. -** Appareil suivant l'une quelconque des revendications 1 à 18 dans lequel la partie supérieure des caissons avant (C1) et arrière (C3) est constituée par une trémie (22, 23), caractérisé en ce que qu'il comprend des moyens permettant de régler la position en hauteur de ces trémies.
